# FASCICULE DE BREVET EUROPEEN

(11) **EP 1 304 065 B1**
(45) Date de publication et mention de la délivrance du brevet: **19.07.2006**
(21) Numéro de dépôt: 02292459.1
(22) Date de dépôt: 04.10.2002
(51) Int. Cl.: A47J 45/06

(54) **Dispositif et procédé de fixation de poignée sur un article culinaire**
Vorrichtung und Verfahren zur Sicherung der Handhabe an einem Kochgeschirr
Device and method for securing a handle on a cooking utensil

(30) Priorité: 19.10.2001 FR 0113526
(43) Date de publication de la demande: 23.04.2003
(73) Titulaire: SEB S.A., 69130 Ecully (FR); FAI Production S.A., 38420 Domene (FR)
(72) Inventeur: Brasset, Jean-Francois, 74960 Cran Gevrier (FR); Roche, Christian, 38610 Vernon la ville (FR)
(74) Mandataire: Somnier, Jean-Louis

(56) Documents cités:
- US-A- 4 008 822
- US-A- 4 032 032
- US-A- 5 462 195

## Description

La présente invention se réfère à un dispositif et un procédé utilisé pour fixer une poignée à un article culinaire tel qu'une casserole, une poêle, etc.

Les dispositifs de fixation d'une poignée sur une paroi latérale d'un article culinaire connus sont du type comprenant un goujon apte à être fixé à la paroi latérale de l'article culinaire par une première extrémité, comportant à sa deuxième extrémité des moyens aptes à assurer la mise en place de la poignée par emboîtement et rapprochement relatif, et la fixation de la poignée, ainsi qu'une embase tubulaire entourant le goujon, apte à s'accoster contre la paroi latérale de l'article culinaire par une première extrémité et à recevoir en butée contre sa deuxième extrémité un épaulement de la poignée.

Les dispositifs de fixation connus présentent ainsi deux composants (le goujon et l'embase) ce qui engendre des coûts pour la gestion des stocks, le transport, la manipulation et l'assemblage de ces pièces.

Dans l'art antérieur, le goujon est d'abord fixé, par exemple par soudage, à la paroi latérale de l'article culinaire par sa première extrémité afin de servir de carré de centrage pour la fixation de la poignée à l'article culinaire.

Ensuite, la poignée est assemblée à l'embase, par exemple par une extrémité annulaire (aussi appelée tenon) qui est emboîtée dans l'embase.

Cet ensemble embase-poignée est placé contre la paroi de l'article culinaire, l'embase et l'extrémité annulaire de la poignée entourant le goujon.

Enfin, la poignée est fixée au goujon, par exemple par une vis introduite dans un orifice traversant la poignée et pénétrant dans une ouverture aveugle du goujon qui prolonge l'orifice de la poignée.

Le vissage de cette vis assure, d'une part, la fixation de la poignée sur le goujon et donc sur l'article culinaire, et, d'autre part, l'accostage de l'embase à la paroi latérale de l'article culinaire et à l'épaulement de la poignée, ce qui renforce la fixation réalisée par le goujon.

Ainsi, les procédés de fabrication actuels pour la fixation des poignées aux articles culinaires avec les dispositifs de fixation à deux composants comportent de nombreuses opérations, notamment de manipulation, ce qui augmente le coût de la fabrication.

En outre, quand le goujon est fixé à l'article culinaire par soudage, il est nécessaire de nettoyer ensuite la paroi latérale de l'article culinaire pour enlever les éclats de soudure, ce qui ajoute une opération supplémentaire laborieuse au procédé de fabrication.

Le problème posé est d'utiliser un dispositif de fixation permettant de faciliter sa manipulation et de réduire le nombre des opérations des procédés de fixation, tout en préservant les fonctions du goujon qui doit être fixé à la paroi latérale de l'article culinaire et servir de carré de centrage et de moyen de fixation de la poignée, et celles de l'embase qui doit prendre appui à la fois contre la paroi latérale de l'article culinaire et la poignée pour renforcer la liaison mécanique réalisée par le goujon et qui protège la poignée des flammes et de la chaleur dégagées par l'article culinaire.

La solution est un dispositif de fixation du type précité dont le goujon et l'embase sont solidarisés l'un à l'autre par des moyens de liaison aptes à se déformer, la première extrémité du goujon faisant saillie d'une longueur prédéterminée hors de la surface définie par la première extrémité de l'embase.

Le dispositif de fixation ne comporte qu'une seule pièce, ce qui réduit les problèmes liés au transport et à la manutention des pièces, et ce qui permet aussi de diminuer les opérations du procédé de fixation de la poignée à l'article culinaire.

Lors de l'opération de fixation du goujon à la paroi latérale de l'article culinaire par soudage, la très grande majorité des éclats de soudure est retenue dans l'espace délimité par l'embase qui entoure le goujon. Ainsi, très peu d'éclats (voire aucun éclat) se déposent sur la partie de la paroi latérale qui ne sera pas cachée par l'embase, ce qui réduit ou élimine l'opération de nettoyage.

Si les moyens de liaison cassent suite à une déformation excessive, cela n'est pas gênant. En effet, l'intérêt essentiel du dispositif est de réduire le nombre de pièces à gérer et le nombre d'opération du procédé de fixation. Une fois le dispositif de fixation fixé à l'article culinaire, le fait qu'il soit en une ou deux parties ne change pas la qualité de la fixation de la poignée à l'article culinaire : ni la fixation du goujon à l'article culinaire, ni celle du goujon à la poignée, ni le renforcement de la liaison mécanique par l'embase, ni la protection thermique de la poignée par l'embase ne se trouvent affectés par une cassure des moyens de liaison due à leur déformation excessive.

Et si les moyens de liaison se laissent déformer sans se casser, ils limitent la prise de jeux qui peut se produire à l'usage, l'embase étant reliée au goujon.

Une autre solution est un procédé de fixation d'une poignée sur une paroi latérale d'un article culinaire par un dispositif de fixation comprenant un goujon et une embase entourant le goujon, comportant les étapes suivantes :
on solidarise le goujon avec l'embase par des moyens de liaison déformables de telle sorte qu'une première extrémité du goujon, apte à être fixée à l'article culinaire, fasse saillie d'une longueur prédéterminée hors de la surface définie par une première extrémité de l'embase;
on fixe cette première extrémité du goujon à la paroi latérale de l'article culinaire;
on met en place la poignée à la deuxième extrémité du goujon grâce à des moyens de rapprochement et de fixation réciproques; et
on déforme, lors de cette mise en place, les moyens de liaison par la pression exercée par un épaulement de la poignée contre la deuxième extrémité de l'embase lors du rapprochement de la poignée de l'article culinaire de telle sorte que et jusqu'à ce que la première extrémité de l'embase s'accoste contre la paroi latérale de l'article culinaire.

D'autres particularités de l'invention résulteront encore de la description qui va suivre.

Aux dessins annexés, donnés à titre d'exemples non limitatifs :
- la figure 1, représente en perspective l'extrémité apte à entrer en contact avec l'article culinaire d'un dispositif selon la présente invention ;
- la figure 2, est une vue similaire à la figure 1 représentant l'extrémité apte à entrer en contact avec la poignée :
- la figure 3 est une vue en coupe du dispositif ;
- la figure 4 est une vue en coupe du dispositif en coopération avec une poignée et un article culinaire, ces trois pièces n'étant pas solidarisées ; et
- la figure 5 est une vue en coupe similaire à la figure 4, les trois pièces étant solidarisées.

Le dispositif de fixation 1 selon la présente invention permet de fixer une poignée 5 à une paroi latérale 6 d'un article culinaire 7.

Il est constitué d'un goujon 2, d'une embase 3 entourant le goujon 2 et de moyens de liaison 4 qui solidarisent le goujon 2 à l'embase 3.

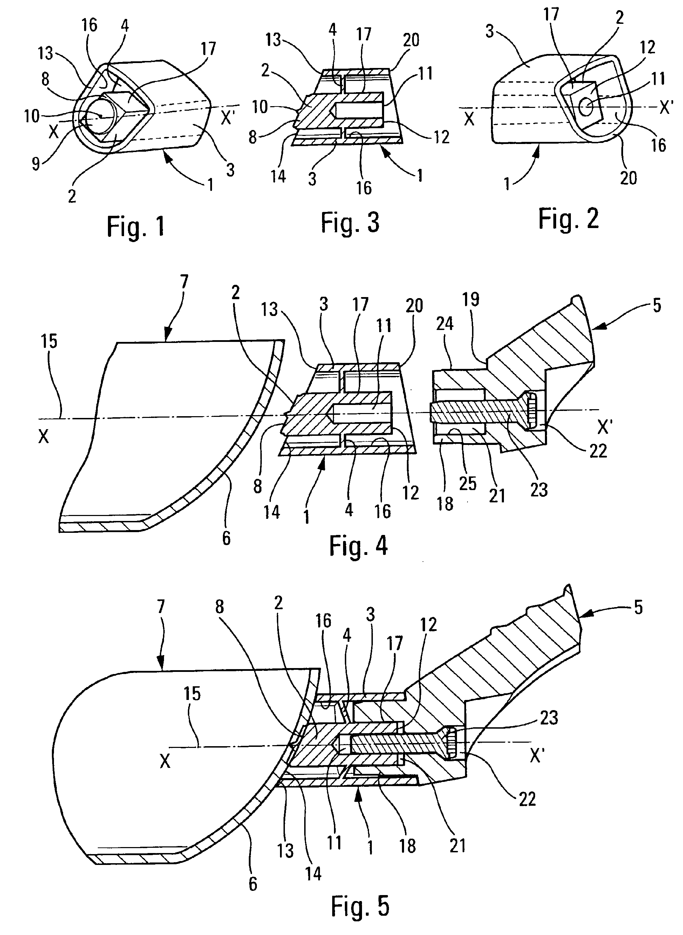

Tel qu'on peut le voir aux figures 1 et 2, le goujon 2 a la forme générale d'un prisme qui peut être à base carrée et d'axe XX', une première extrémité 8 étant adaptée à être fixée à la paroi latérale 6 de l'article culinaire 7, la deuxième extrémité 12 comportant des moyens assurant le rapprochement et la liaison de la poignée 5.

Pour optimiser la fixation de l'extrémité 8 du goujon 2 à la paroi latérale 6 de l'article culinaire 7, cette extrémité 8 et la zone de la paroi latérale 6 à laquelle elle va être fixée sont sensiblement parallèles.

De plus, dans l'exemple illustré aux figures 1 à 5, l'extrémité 8 du goujon 2 est conformée de façon à faciliter sa fixation par soudage à la paroi latérale 6 et comporte ainsi un disque plat 9 muni d'une pointe 10 dirigée vers l'extérieur.

Tel qu'on peut le voir aux figures 1 et 2, l'embase 3 a la forme générale d'un tube creux qui peut être à base carrée dont un coté est arrondi, ce tube possédant une première extrémité 13 adaptée à s'accoster à la paroi latérale 6 de l'article culinaire 7, et une deuxième extrémité 20 apte à recevoir la poignée 5 en butée. L'embase 3 peut avoir diverses formes, par exemple cylindrique à section constante, afin d'améliorer l'esthétique du dispositif 1.

Dans l'exemple illustré aux figures 1 à 5, l'embase 3 s'étend selon la même direction 15 que celle du goujon 2, soit selon l'axe XX', soit selon un axe parallèle.

Pour réaliser un accostage correct de l'extrémité 13 de l'embase 3 à la paroi latérale 6 de l'article culinaire 7, la surface 14 définie par cette extrémité 13 et la zone de la paroi latérale 6 à laquelle elle va s'accoster, sont sensiblement parallèles.

Les moyens de liaison 4 permettent de maintenir le goujon 2 et l'embase 3 dans la même direction 15, et de faire en sorte que l'extrémité 8 du goujon 2 qui est apte à être fixée à la paroi latérale 6 de l'article culinaire 7, fasse saillie hors de la surface 14 définie par l'extrémité 13 de l'embase 3 qui est apte à s'accoster à cette même paroi latérale 6. De ce fait il est possible de de fixer le goujon 2 à la paroi latérale 6 par soudage, le goujon 2 étant la seule pièce en contact avec l'article culinaire 7.

Evidemment, la distance séparant l'extrémité 8 du goujon 2 à celle de l'embase 3 dépend de la dimension de l'article culinaire 7 et des moyens utilisés pour la fixation du goujon 2 à la paroi latérale 6. Elle peut être déterminé facilement par tout homme du métier et, de façon générale, elle est comprise entre 1 et 3mm et, de préférence, égale à 2mm.

Les moyens de liaison 4 permettent, par leur déformation sous la pression exercée par la poignée 5 sur l'embase 3 lors de la mise en place de celle-ci, que l'extrémité 13 de l'embase 3 se rapproche progressivement de la paroi latérale 6 de l'article culinaire 7 jusqu'à s'y accoster.

Dans l'exemple illustré aux figures 1 à 5, les moyens de liaison 4 s'étendent de la surface latérale interne 16 de l'embase 3 à la surface latérale externe 17 du goujon 2.

Dans cet exemple particulier, ces moyens sont constitués par une cloison pleine 4. Celle-ci peut se situer comme sur les figures vers le milieu du goujon 2, mais elle peut être disposée plus près de l'une de ses deux extrémités.

Tel qu'on peut le voir aux figures 3 et 4, avant l'utilisation du dispositif de fixation 1, la cloison 4 est normale aux surfaces latérales 16, 17 respectives de l'embase 3 et du goujon 2.

Pour permettre une déformation ne demandant pas de trop grand efforts, les moyens de liaison 4 ont une épaisseur comprise entre 0,5 et 2mm, et de préférence 1,5mm, l'épaisseur variant notamment en fonction du matériau utilisé.

Dans l'exemple illustré aux figures 1 à 5, la poignée 5 comporte une extrémité annulaire 18 qui est apte à s'emboîter entre le goujon 2 et l'embase 3.

L'extrémité annulaire 18 est limitée, à sa surface latérale externe 24, par un épaulement 19 qui est apte à venir en butée contre la deuxième extrémité 20 de l'embase 3, définissant ainsi l'enfoncement maximal de l'extrémité annulaire 18 dans le dispositif de fixation 1.

La surface latérale interne 25 de l'extrémité annulaire 18 est limitée par un logement 21 qui est apte à recevoir la deuxième extrémité 12 du goujon 2.

Un orifice 22 est réalisé dans l'extrémité annulaire 18. Cet orifice 22 prolonge le logement 21 et traverse la poignée 5.

Dans l'exemple illustré aux figures 1 à 5, le goujon 2 comporte une ouverture aveugle 11 qui débouche à sa deuxième extrémité 12 et qui est apte à coopérer avec une vis 23 préalablement engagée dans l'orifice 22.

Cet orifice 22 se trouve au droit de l'ouverture aveugle 11 du goujon 2, quand l'extrémité annulaire 18 de la poignée est emboîtée dans le dispositif de fixation 1, entre le goujon 2 et l'embase 3, le goujon 2 étant introduit dans le logement 21. La pression exercée lors du vissage de la vis 23 permet de déformer les moyens de liaison 4.

De préférence, l'axe de l'ouverture aveugle 11 est parallèle à la direction de l'embase 3.

L'espacement entre le goujon 2 et l'embase 3 et l'épaisseur de l'extrémité annulaire 18 sont tels qu'il existe un léger jeu entre, d'une part, la surface latérale externe 24 de l'extrémité annulaire 18 et la surface latérale interne 16 de l'embase 3, et, d'autre part, la surface latérale interne 25 de l'extrémité annulaire 18 et la surface latérale externe 17 du goujon 2, ce jeu étant nécessaire pour réaliser l'assemblage.

La fixation de la poignée 5 au dispositif 1 est donc réalisée par la coopération entre l'ouverture aveugle 11 du goujon 2 et la vis 23 et elle est renforcée, d'une part, par l'embase 3 qui est accostée à l'article culinaire 7 et à la poignée 5, et, d'autre part, par l'emboîtement de l'extrémité annulaire 18 de la poignée 5 dans le dispositif de fixation 1, entre le goujon 2 et l'embase 3.

L'ouverture aveugle 11 peut être taraudée de façon à pouvoir coopérer avec une vis 23. L'ouverture 11 peut aussi être apte à coopérer avec une vis 23 autotaraudeuse, ce qui permet de supprimer l'opération de taraudage de l'ouverture 11 après la fabrication du dispositif de fixation 1 et de réduire ainsi le coût de fabrication du dispositif 1.

Le matériau utilisé pour fabriquer le dispositif de fixation 1 doit permettre à l'embase 3 de remplir toute ses fonctions et notamment de protéger la poignée 5 des flammes et de la chaleur émise par l'article culinaire 7. Il doit aussi permettre au goujon 2 de pouvoir être facilement fixer à la paroi latérale 6 de l'article culinaire 7, notamment par soudage. Il doit enfin permettre aux moyens de liaison 4 de se déformer sous la seule pression exercée par le rapprochement de la poignée, notamment par l'effort et le couple de vissage quand la poignée est fixée au goujon 2 par une vis 23.

Le dispositif de fixation 1 selon la présente invention peut être fabriqué notamment par moulage par injection ou par frappe à froid dans un matériau ductile. Dans le cas de la fabrication par frappe à froid, il est possible d'utiliser une barre cylindrique.

De préférence, dans le cas de fabrication par frappe à froid ou par moulage, de part et d'autre des moyens de liaison 4, à partir de ces moyens de liaison 4, la surface latérale interne 16 de l'embase 3 et la surface latérale externe 17 du goujon 2 sont soit parallèles (comme dans l'exemple illustré par les figures 1 à 5), soit divergentes. Il est entendu que, les surfaces 16, 17 peuvent être parallèles d'un côté des moyens de liaison 4, et diverger de l'autre côté.

Le dispositif de fixation 1 selon la présente invention peut notamment être réalisé en aluminium ou en alliage d'aluminium, par exemple en aluminium de la série 5000.

On pourrait envisager, dans le cadre de l'invention, de réaliser l'embase 3 et le goujon 2 séparément puis de les réunir par une paroi 4 rapportée. De préférence, ce mode de réalisation est alors automatisé. La gestion des stocks et le montage sur un ustensile restent facilités. Cette paroi pourrait alors être en un autre matériau que celui de l'embase et du goujon, par exemple en matière plastique.

Pour fixer la poignée 5 à l'article culinaire 7 en utilisant un dispositif de fixation 1 selon la présente invention, on fixe d'abord le dispositif de fixation 1 à la surface latérale 6 de l'article culinaire 7 par l'extrémité 8 du goujon 2, par exemple par soudage.

Après avoir fixé le dispositif de fixation 1 à l'article culinaire 7, on introduit l'extrémité annulaire 18 de la poignée 5 entre le goujon 2 et l'embase 3 et on engage une vis 23 dans l'orifice 22 de la poignée 5. Comme l'orifice 22 et l'ouverture aveugle 11 du goujon sont en regard l'un de l'autre, la vis 23 pénètre dans cette ouverture aveugle 11.

L'orifice 22 comporte un épaulement contre lequel la tête de la vis 23 est apte à venir en butée, de façon à limiter la pénétration de la vis 23 dans cet orifice 22 et à permettre à l'épaulement 19 de la poignée 5 de se rapprocher progressivement de l'extrémité 20 de l'embase 3 par vissage.

En poursuivant le vissage, la poignée 5 étant en butée contre le dispositif de fixation 1 par l'intermédiaire de l'épaulement 19, l'extrémité 13 de l'embase 3 se rapproche progressivement de la paroi latérale 6 de l'article culinaire 7 jusqu'à s'y accoster grâce à la déformation des moyens de liaison 4.

Il est clair que si les moyens de liaison 4 cassent suite à une déformation excessive, cela n'a aucun inconvénient, cette rupture n'empêchant ni le goujon 2, ni l'embase 3 d'assurer pleinement leurs fonctions respectives.

Les avantages d'un tel dispositif réside d'une part dans la gestion des stocks des dispositifs de fixation 1 (qui n'est évidemment pas influencé par le stock d'article culinaire 7 muni de leur poignée 5), d'autre part dans la diminution du nombre d'opérations dans le procédé de fixation (l'opération d'accostage de l'embase 3 sur la paroi latérale de l'article culinaire 6 est la dernière opération du procédé, ni le confinement des éclats de soudure lors de l'opération de soudage du goujon 2, ni l'accostage ne peuvent être remis en cause par une éventuelle rupture des moyens de liaison 4).

De plus, il possible d'utiliser le même outillage que celui utilisé pour les dispositifs en deux parties après y avoir apporté quelques modifications.

Selon un mode de réalisation particulier, afin de ne pas modifier l'outillage utilisé pendant le procédé de fixation, en particulier les pinces utilisées pour assurer l'arc électrique permettant le soudage et qui viennent en prise avec la deuxième extrémité 12 du goujon 2, cette extrémité 12 fait saillie hors de la surface définie par la deuxième extrémité 20 de l'embase 3. De préférence, la saillie est de 5mm au moins.

Bien entendu, l'invention n'est pas limitée au mode de réalisation décrit ci-dessus et on peut y apporter de nombreuses variantes d'exécution.

Par exemple, il est possible d'adapter le profil de l'embase à une forme esthétique particulière sans que cela ne modifie ses propriétés techniques.

## Revendications

1. Dispositif de fixation (1) d'une poignée (5) sur une paroi latérale (6) d'un article culinaire (7) comprenant un goujon (2) apte à être fixé à la paroi latérale (6) de l'article culinaire (7) par une première extrémité (8), comportant à sa deuxième extrémité (12) des moyens (11) aptes à assurer la mise en place de la poignée (5) par emboîtement et rapprochement relatif et la fixation de la poignée (5), ainsi qu'une embase (3) tubulaire entourant le goujon (2), apte à s'accoster contre la paroi latérale (6) de l'article culinaire (7) par une première extrémité (13) et à recevoir en butée contre sa deuxième extrémité (20) un épaulement (19) de la poignée (5), **caractérisé en ce que** le goujon (2) et l'embase (3) sont solidarisés l'un à l'autre par des moyens de liaison (4) aptes à se déformer, et **en ce que** la première extrémité (8) du goujon (2) fait saillie d'une longueur prédéterminée hors de la surface (14) définie par la première extrémité (13) de l'embase (3).

2. Dispositif de fixation (1) selon la revendication 1, **caractérisé en ce que** le goujon (2) comporte une ouverture aveugle (11) débouchant à sa deuxième extrémité (12), apte à coopérer avec une vis (23) préalablement engagée dans un orifice (22) réalisé dans une extrémité annulaire (18) de la poignée (5), les moyens de liaison (4) se déformant sous la pression exercée lors du vissage de la vis (23).

3. Dispositif de fixation (1) selon la revendication 2, **caractérisé en ce que** l'ouverture aveugle (11) du goujon (2) est taraudée.

4. Dispositif de fixation (1) selon la revendication 2, **caractérisé en ce que** l'ouverture aveugle (11) du goujon (2) est apte à coopérer avec une vis (23) autotaraudeuse.

5. Dispositif de fixation (1) selon l'une des revendication 1 à 4, **caractérisé en ce que** les moyens de liaison (4) s'étendent de la surface latérale interne (16) de l'embase (3) à la surface latérale externe (17) du goujon (2).

6. Dispositif de fixation (1) selon l'une des revendications 1 à 5, **caractérisé en ce que** les moyens de liaison (4) sont constitués d'une cloison (4) pleine.

7. Dispositif de fixation (1) selon la revendication 6, **caractérisé en ce que** la cloison (4) a une épaisseur comprise entre 0,5 et 2mm, et de préférence sensiblement égale à 1,5mm.

8. Dispositif de fixation (1) selon l'une des revendications 1 à 7, **caractérisé en ce que** de part et d'autre des moyens de liaison (4), à partir de ces moyens de liaison (4), la surface latérale interne (16) de l'embase (3) et la surface latérale externe (17) du goujon (2) sont parallèles ou divergentes.

9. Dispositif de fixation (1) selon l'une des revendications 1 à 8, **caractérisé en ce que** le goujon (2) et l'embase (3) s'étendent dans une même direction (15).

10. Dispositif de fixation (1) selon l'une des revendications 1 à 9, **caractérisé en ce que** l'embase (3) a une structure cylindrique à section constante.

11. Dispositif de fixation (1) selon l'une des revendications 1 à 10, **caractérisé en ce que** la première extrémité (8) du goujon fait saillie hors de la surface (14) définie par la première extrémité (13) de l'embase d'une longueur comprise entre 1 et 3mm, et de préférence 2mm.

12. Dispositif de fixation (1) selon l'une des revendications 1 à 11, **caractérisé en ce que** la deuxième extrémité (12) du goujon fait saillie hors de la surface définie par la deuxième extrémité (20) de l'embase (3) d'une longueur prédéterminée, de préférence au moins 5mm.

13. Dispositif de fixation (1) selon l'une des revendications 1 à 12, **caractérisé en ce que** le goujon (2) est apte à être soudé à la paroi latérale (6) de l'article culinaire (7).

14. Dispositif de fixation (1) selon l'une des revendications 1 à 13, **caractérisé en ce qu**'il est réalisé en aluminium ou en alliage d'aluminium.

15. Dispositif de fixation (1) selon l'une des revendication 1 à 14, **caractérisé en ce qu**'il est fabriqué par moulage par injection ou par frappe à froid à partir d'un matériau ductile.

16. Procédé de fixation d'une poignée (5) sur une paroi latérale (6) d'un article culinaire (7) par un dispositif de fixation (1) comprenant un goujon (2) et une embase (3) entourant le goujon (2), comportant les étapes suivantes :
on solidarise le goujon (2) avec l'embase (3) par des moyens de liaison (4) déformables de telle sorte qu'une première extrémité (8) du goujon (2) apte à être fixée à l'article culinaire (7) fasse saillie d'une longueur prédéterminée hors de la surface (14) définie par une première extrémité (13) de l'embase (3);
on fixe cette première extrémité (8) du goujon (2) à la paroi latérale (6) de l'article culinaire (7);
on met en place la poignée (5) à la deuxième extrémité (12) du goujon (2) grâce à des moyens (11, 23) de rapprochement et de fixation réciproques ; et
on déforme, lors de cette mise en place, les moyens de liaison (4) par la pression exercée par un épaulement (19) de la poignée (5) contre la deuxième extrémité (20) de l'embase (3) lors du rapprochement de la poignée (5) de l'article culinaire (7) de telle sorte que et jusqu'à ce que la première extrémité (13) de l'embase (3) s'accoste contre la paroi latérale (6) de l'article culinaire (7).

17. Procédé de fabrication selon la revendication 16, **caractérisé en ce que** l'extrémité (8) du goujon (2) est fixée à la paroi latérale (6) de l'article culinaire (7) par soudage.

18. Procédé de fabrication selon l'une des revendications 16 ou 17, **caractérisé en ce que** la fixation et le rapprochement de la poignée (5) sont réalisés par le vissage, dans une ouverture aveugle (11) débouchant à la deuxième extrémité (12) du goujon (2), d'une vis préalablement engagée dans un orifice (22) de la poignée (5).

## Claims

1. Device (1) for fixing a handle (5) to a side wall (6) of a cooking vessel (7) comprising a plug (2) which can be fixed to the side wall (6) of the cooking vessel (7) by its first end (8), comprising at its second end (12) means (11) able to put the handle (5) in place, by fitting together and bringing closer together, and fix the handle (5), and a tubular collar (3) surrounding the plug (2), able to come into abutment against the side wall (6) of the cooking vessel (7) via a first end (13) and to receive in abutment, against its second end (20), a shoulder (19) of the handle (5), **characterized in that** the plug (2) and the collar (3) are joined to one another by deformable connecting means (4), and **in that** the first end (8) of the plug (2) projects by a predetermined length beyond the surface (14) defined by the first end (13) of the collar (3).

2. Fixing device (1) according to Claim 1, **characterized in that** the plug (2) has a blind hole (11) opening out at its second end (12), which can interact with a screw (23) inserted beforehand in an orifice (22) made in an annular end (18) of the handle (5), the connecting means (4) deforming under the pressure exerted when the screw (23) is screwed in.

3. Fixing device (1) according to Claim 2, **characterized in that** this blind hole (11) in the plug (2) is tapped.

4. Fixing device (1) according to Claim 2, **characterized in that** the blind hole (11) in the plug (2) can interact with a self-tapping screw (23).

5. Fixing device (1) according to one of Claims 1 to 4, **characterized in that** the connecting means (4) extend from the internal lateral surface (16) of the collar (3) to the external lateral surface (17) of the plug (2).

6. Fixing device (1) according to one of Claims 1 to 5, **characterized in that** the connecting means (4) consist of a solid partition (4).

7. Fixing device (1) according to Claim 6, **characterized in that** the partition (4) is between 0.5 and 2 mm thick, preferably about 1.5 mm thick.

8. Fixing device (1) according to one of Claims 1 to 7, **characterized in that**, on either side of the connecting means (4), starting from these connecting means (4), the internal lateral surface (16) of the collar (3) and the external lateral surface (17) of the plug (2) are parallel or divergent.

9. Fixing device (1) according to one of Claims 1 to 8, **characterized in that** the plug (2) and the collar (3) lie in the same direction (15).

10. Fixing device (1) according to one of Claims 1 to 9, **characterized in that** the collar (3) has a cylindrical structure of constant section.

11. Fixing device (1) according one of Claims 1 to 10, **characterized in that** the first end (8) of the plug projects beyond the surface (14) defined by the first end (13) of the collar by a length of between 1 and 3 mm, preferably 2 mm.

12. Fixing device (1) according to one of Claims 1 to 11, **characterized in that** the second end (12) of the plug projects beyond the surface defined by the second end (20) of the collar (3) by a predetermined length, preferably of at least 5 mm.

13. Fixing device (1) according to one of Claims 1 to 12, **characterized in that** the plug (2) can be welded to the side wall (6) of the cooking vessel (7).

14. Fixing device (1) according to one of Claims 1 to 13, **characterized in that** it is made of aluminium or aluminium alloy.

15. Fixing device (1) according to one of Claims 1 to 14, **characterized in that** it is made by injection moulding or cold heading a ductile material.

16. Method of fixing a handle (5) to a side wall (6) of a cooking vessel (7) using a fixing device (1) comprising a plug (2) and a collar (3) surrounding the plug (2), comprising the following steps:
the plug (2) is joined to the collar (3) by deformable connecting means (4) in such a way that a first end (8) of the plug (2), which can be fixed to the cooking vessel (7), projects by a predetermined length beyond the surface (14) defined by a first end (13) of the collar (3);
this first end (8) of the plug (2) is fixed to the side wall (6) of the cooking vessel (7);
the handle (5) is put in place at the second end (12) of the plug (2) using means (11, 23) for bringing them closer together and fixing them reciprocally; and
as the handle is being put in place, the connecting means (4) are deformed owing to the pressure exerted by a shoulder (19) of the handle (5) on the second end (20) of the collar (3) as the handle (5) of the cooking vessel (7) is brought closer, in such a way that and until the first end (13) of the collar (3) comes into abutment against the side wall (6) of the cooking vessel (7).

17. Fixing method according to Claim 16, **characterized in that** the end (8) of the plug (2) is fixed to the side wall (6) of the cooking vessel (7) by welding.

18. Fixing method according to one of Claims 16 or 17, **characterized in that** the handle (5) is fixed and brought closer by screwing, into a blind hole (11) which opens out at the second end (12) of the plug (2), a screw inserted beforehand in an orifice (22) in the handle (5).

## Patentansprüche

1. Vorrichtung (1) zum Befestigen eines Griffs (5) an einer Seitenwand (6) eines Kochgeschirrteils (7), mit einem Bolzen (2), der dazu geeignet ist, mit einem ersten Ende (8) an der Seitenwand (6) des Kochgeschirrteils (7) befestigt zu werden und an seinem zweiten Ende (12) Mittel (11) enthält, die dazu geeignet sind, durch Ineinandergreifen und relative Annäherung das Ansetzen des Griffs (5) und das Befestigen des Griffs (5) zu gewährleisten, somit mit einem rohrförmigen Ansatzteil (3), das den Bolzen (2) umgibt und dazu geeignet ist, sich mit einem ersten Ende (13) an die Seitenwand (6) des Kochgeschirrteils (7) anzufügen und in Anschlag an seinem zweiten Ende (20) eine Schulter (19) des Griffs (5) aufzunehmen, **dadurch gekennzeichnet, dass** der Bolzen (2) und das Ansatzteil (3) über verformbare Verbindungsmittel (4) fest miteinander verbunden sind und dass das erste Ende (8) des Bolzens (2) mit einer vorbestimmten Länge aus der Fläche (14) vorsteht, die von dem ersten Ende (13) des Ansatzteils (3) definiert wird.

2. Befestigungsvorrichtung (1) nach Anspruch 1, **dadurch gekennzeichnet, dass** der Bolzen (2) eine Sacklochbohrung (11) aufweist, die an seinem zweiten Ende (12) ausmündet und mit einer Schraube (23) zusammenwirken kann, die zuvor in eine Öffnung (22) eingeführt wird, welche in einem ringförmigen Ende (18) des Griffs (5) ausgebildet ist, wobei die Verbindungsmittel (4) sich unter dem Druck verformen, der beim Einschrauben der Schraube (23) ausgeübt wird.

3. Befestigungsvorrichtung (1) nach Anspruch 2, **dadurch gekennzeichnet, dass** die Sacklochbohrung (11) des Bolzens (2) mit einem Innengewinde versehen ist.

4. Befestigungsvorrichtung (1) nach Anspruch 2, **dadurch gekennzeichnet, dass** die Sacklochbohrung (11) des Bolzens (2) mit einer selbstschneidenden Schraube (23) zusammenwirken kann.

5. Befestigungsvorrichtung (1) nach einem der Ansprüche 1 bis 4, **dadurch gekennzeichnet, dass** die Verbindungsmittel (4) sich von der inneren Seitenfläche (16) des Ansatzteils (3) zur äußeren Seitenfläche (17) des Bolzens (2) erstrecken.

6. Befestigungsvorrichtung (1) nach einem der Ansprüche 1 bis 5, **dadurch gekennzeichnet, dass** die Verbindungsmittel (4) aus einer massiven Zwischenwand (4) bestehen.

7. Befestigungsvorrichtung (1) nach Anspruch 6, **dadurch gekennzeichnet, dass** die Zwischenwand (4) eine Dicke zwischen 0,5 und 2 mm, vorzugsweise im wesentlichen gleich 1,5 mm aufweist.

8. Befestigungsvorrichtung (1) nach einem der Ansprüche 1 bis 7, **dadurch gekennzeichnet, dass** beiderseits der Verbindungsmittel (4) die innere Seitenfläche (16) des Ansatzteils (3) und die äußere Seitenfläche (17) des Bolzens (2) ausgehend von diesen Verbindungsmitteln (4) parallel oder divergierend verlaufen.

9. Befestigungsvorrichtung (1) nach einem der Ansprüche 1 bis 8, **dadurch gekennzeichnet, dass** der Bolzen (2) und das Ansatzteil (3) in einer gleichen Richtung (15) verlaufen.

10. Befestigungsvorrichtung (1) nach einem der Ansprüche 1 bis 9, **dadurch gekennzeichnet, dass** das Ansatzteil (3) einen zylindrischen Aufbau mit konstantem Querschnitt aufweist.

11. Befestigungsvorrichtung (1) nach einem der Ansprüche 1 bis 10, **dadurch gekennzeichnet, dass** das erste Ende (8) des Bolzens aus der von dem ersten Ende (13) des Ansatzteils gebildeten Fläche (14) mit einer Länge von zwischen 1 und 3 mm, vorzugsweise von 2 mm vorsteht.

12. Befestigungsvorrichtung (1) nach einem der Ansprüche 1 bis 11, **dadurch gekennzeichnet, dass** das zweite Ende (12) des Bolzens aus der von dem zweiten Ende (20) des Ansatzteils gebildeten Fläche mit einer vorbestimmten Länge, vorzugsweise mindestens 5 mm vorsteht.

13. Befestigungsvorrichtung (1) nach einem der Ansprüche 1 bis 12, **dadurch gekennzeichnet, dass** der Bolzen (2) mit der Seitenwand (6) des Kochgeschirrteils (7) verschweißbar ist.

14. Befestigungsvorrichtung (1) nach einem der Ansprüche 1 bis 13, **dadurch gekennzeichnet, dass** sie aus Aluminium oder aus einer Aluminiumlegierung hergestellt ist.

15. Befestigungsvorrichtung (1) nach einem der Ansprüche 1 bis 14, **dadurch gekennzeichnet, dass** sie durch Spritzgießen oder Kaltschlagen aus einem duktilem Material hergestellt ist.

16. Verfahren zum Befestigen eines Griffs (5) an einer Seitenwand (6) eines Kochgeschirrteils (7) über eine Befestigungsvorrichtung (1) mit einem Bolzen (2) und einem den Bolzen (2) umgebenden Ansatzteil (3), umfassend folgende Schritte:
- der Bolzen (2) wird fest mit dem Ansatzteil (3) über verformbare Verbindungsmittel (4) so verbunden, dass ein an das Kochgeschirrteil (7) befestigbares erstes Ende (8) des Bolzens (2) mit einer vorbestimmten Länge aus der Fläche (14) vorsteht, die von einem ersten Ende (13) des Ansatzteils (3) definiert wird,
- dieses erste Ende (8) des Bolzens (2) wird an der Seitenwand (6) des Kochgeschirrteils (7) befestigt,
- der Griff (5) wird an das zweite Ende (12) des Bolzens (2) über Mittel (11, 23) zum gegenseitigen Annähern und Befestigen angesetzt,
und
- bei diesem Ansetzen werden die Verbindungsmittel (4) durch den Druck verformt, der von einer Schulter (19) des Griffs (5) auf das zweite Ende (20) des Ansatzteils (3) beim Annähern des Griffs (5) an das Kochgeschirrteil (7) derart und solange ausgeübt wird, bis das erste Ende (13) des Ansatzteils (3) sich an die Seitenwand (6) des Kochgeschirrteils (7) anfügt.

17. Herstellungsverfahren nach Anspruch 16, **dadurch gekennzeichnet, dass** das Ende (8) des Bolzens (2) durch Verschweißen an die Seitenwand (6) des Kochgeschirrteils (7) befestigt wird.

18. Herstellungsverfahren nach Anspruch 16 oder 17, **dadurch gekennzeichnet, dass** das Befestigen und Annähern des Griffs (5) durch das Einschrauben einer zuvor in eine Öffnung (22) des Griffs (5) eingeführten Schraube in eine Sacklochbohrung (11) erfolgt, die am zweiten Ende (12) des Bolzens (2) ausmündet.
